# EUROPEAN PATENT SPECIFICATION

(11) **EP 3 576 066 B1**
(45) Date of publication and mention of the grant of the patent: **24.06.2020**
(21) Application number: 18193947.1
(22) Date of filing: 12.09.2018
(51) Int. Cl.: G08C 17/02, H04Q 9/00, H04W 88/16, H04W 4/70

(54) **STANDALONE IOT GATEWAY DIRECTLY CONNECTABLE TO USER TERMINAL USING LOCAL AREA COMMUNICATION TECHNOLOGY**
EIGENSTÄNDIGES IOT-GATEWAY, DAS MITHILFE VON TECHNOLOGIE ZUR LOKALEN KOMMUNIKATION DIREKT MIT EINEM BENUTZERENDGERÄT VERBUNDEN WERDEN KANN
PASSERELLE IOT AUTONOME POUVANT ÊTRE DIRECTEMENT CONNECTÉE À UN TERMINAL UTILISATEUR À L'AIDE DE LA TECHNOLOGIE DE COMMUNICATION LOCALE

(30) Priority: 31.05.2018 KR 20180062767
(43) Date of publication of application: 04.12.2019
(73) Proprietor: GRIB CO., LTD., Seocho-gu Seoul (KR)
(72) Inventor: JUNG, Yeon Kyu, Seoul (KR); JIN, Young Chul, Gyeonggi-do (KR)
(74) Representative: Glawe, Delfs, Moll

(56) References cited:
- KR-B1- 101 723 984
- US-A1- 2014 129 006

## Description

### BACKGROUND

### 1. Field

The present inventive concept relates to an Internet of things (IoT) technology, and more particularly, to an IoT gateway that mediates an IoT device and a user terminal to transmit and receive data directly without intervention of a server.

### 2. Description of the Related Art

Smart devices are becoming more closely related to real life as Internet connection becomes possible through various smart devices such as smartphones, smart pads, smart sensors, smart TVs, and smart cars. Accordingly, the number of smart devices owned per capita is expected to increase even more than now, with about 25 billion devices expected to be connected based on wireless Internet.

With the development of these smart devices, research is being intensively conducted on the Internet of things (IoT) such as machine to machine (M2M), intuitive Internet of things (I2oT), and web of things (WoT). The IoT connects each sensor to an external network through a network system and processes and manages the sensing result of each sensor in real time. The ultimate goal of the IoT is to provide computing and communication functions to all objects so as to implement a communication-enabled environment anytime and anywhere, regardless of network, device and service.

To use this IoT service, a smart device of a user sends and receives messages to and from IoT devices through an external server. Specifically, various kinds of IoT devices located in a house or a specific space are connected to an external server through a network.

Using a smart device, a user may transmit control command messages for the IoT devices to the external server or receive status information messages regarding the IoT devices from the external server.

However, since messages exchanged between the smart device of the user and the IoT devices must pass through the external server as described above, the speed of message transmission is reduced.

In addition, it costs a lot to construct and maintain a server including a large database. To save costs, using a server of another company can be considered. Even in this case, however, a server usage fee is incurred for using the server of the company, although there is no server construction cost and maintenance cost. Furthermore, since the server of the company can collect personal information of users using the IoT service, the possibility of leakage of personal information is increased.

US 2014/129006 A1 describes a method for smart controlling of a number of home appliances, which may act upon the approach of a user to the smart home, and a smart home system, which learns the habits of a user, and a corresponding smart gateway.

### SUMMARY

Aspects of the inventive concept provide a standalone Internet of things (IoT) gateway which can independently provide an IoT service using a local area communication technology without via a server.

Aspects of the inventive concept also provide a standalone IoT gateway which can increase the speed of message transmission between IoT devices and a smart device of a user.

Aspects of the inventive concept also provide a standalone IoT gateway which can minimize the leakage of personal information.

Aspects of the inventive concept also provide a standalone IoT gateway which can communicate with IoT devices supporting various kinds of communication protocols.

Aspects of the inventive concept also provide an IoT gateway which has a function of providing a wireless Internet connection to an IoT device or a user terminal.

Aspects of the inventive concept also provide an IoT gateway which provides a web user interface (UI) that enables a user terminal to set a function by itself.

However, aspects of the inventive concept are not restricted to the one set forth herein. The above and other aspects of the inventive concept will become more apparent to one of ordinary skill in the art to which the inventive concept pertains by referencing the detailed description of the inventive concept given below.

According to an aspect of the inventive concept, there is provided provided a standalone Internet of things (IoT) gateway comprising: a connection mode determination unit which determines one of a first connection mode and a second connection mode, a first service performing unit which transmits status messages obtained from one or more IoT devices to a smart device of a user through a router or receives control commands for the IoT devices from the smart device of the user through the router and transmits the received control commands to the IoT devices when the first connection mode is determined as a onnection mode and a second service performing unit which transmits the status messages obtained from the IoT devices to a management server through the router or receives the control commands for the IoT devices from the management server through the router and transmits the received control commands to the IoT devices when the second connection mode is determined as the connection mode.

At this time, the first service performing unit converts the status messages obtained from the IoT devices into a first data format that can be processed by the smart device of the user and transmits the converted status messages to the smart device of the user through the router.

The second service performing unit converts the status messages obtained from the IoT devices into a second data format that can be processed by the management server and transmits the converted status messages to the management server through the router.

The connection mode determination unit initially determines the connection mode to be the first connection mode and changes the connection mode from the first connection mode to the second connection mode when a connection mode change condition is satisfied.

The standalone Internet of things (IoT) gateway further comprising: a memory which stores the status messages obtained from the IoT devices and the control commands for the IoT devices, and a backup performing unit which transmits some of data stored in the memory to the management server through the router.

The connection mode determination unit initially determines the connection mode to be the first connection mode and changes the connection mode from the first connection mode to the second connection mode when a backup condition is satisfied, and the backup performing unit transmits some of the data stored in the memory to the management server through the router when the connection mode is changed to the second connection mode.

The connection mode determination unit sets a case where data related to a specific IoT device among the IoT devices is stored in the memory as the backup condition.

The connection mode determination unit sets a case where a space in which data is stored in the memory exceeds a threshold value as the backup condition.

The first service performing unit comprises a first communication module which is paired with at least one of the IoT devices and connected to the at least one IoT device, and the second service performing unit comprises a second communication module which is paired with the rest of the IoT devices and connected to the rest of the IoT devices.

The first service performing unit comprises a message queuing telemetry transport (MQTT) broker which processes publisher registration and topic allocation for a first IoT device and performs subscription to a topic of the first IoT device for a smart device wishing to receive a status message of the first IoT device.

The first service performing unit comprises an MQTT broker which, when a control command for the first IoT device is received, processes the control command as a publication request comprising the topic indicating the first IoT device and the control command.

The standalone Internet of things (IoT) gateway further comprising a Wi-Fi host unit which comprises a dynamic domain name system (DDNS) service module, a dynamic host configuration protocol (DHCP) service module, and a port forwarding service module.

The Wi-Fi host unit comprises only the DDNS service module, the DHCP service module, and the port forwarding service module.

According to another aspect of the inventive concept, there is provided there is provided a standalone IoT gateway comprising: a Wi-Fi host unit which comprises only a DDNS service module, a DHCP service module, and a port forwarding service module, and a first service performing unit which transmits status messages obtained from one or more IoT devices to a directly connected smart device through the Wi-Fi host unit or transmits control commands for the IoT devices received from the smart device to the IoT devices.

According to another aspect of the inventive concept, there is provided a standalone IoT gateway comprising: a first gateway which connects to a router and transmits status messages obtained from one or more IoT devices to a smart device of a user through the router or receives control commands for the IoT devices from the smart device of the user through the router and transmits the received control commands to the IoT devices, and a second gateway which connects to the router when an error occurs in the first gateway and transmits the status messages obtained from the IoT devices to a management server through the router or receives the control commands for the IoT devices from the management server through the router and transmits the received control commands to the IoT devices.

The first gateway comprises: a memory which stores the status messages obtained from the IoT devices and the control commands for the IoT devices; and a backup performing unit which transmits some of data stored in the memory to the management server through the router.

The second gateway is activated when an error occurs in the first gateway and is paired with the IoT devices.

The first gateway converts the status messages obtained from the IoT devices into a first data format that can be processed by the smart device of the user and transmits the converted status messages to the smart device of the user through the router.

The second gateway converts the status messages obtained from the IoT devices into a second data format that can be processed by the management server and transmits the converted status messages to the management server through the router.

### BRIEF DESCRIPTION OF THE DRAWINGS

These and/or other aspects will become apparent and more readily appreciated from the following description of the embodiments, taken in conjunction with the accompanying drawings in which:
FIG. 1 illustrates the configuration of an Internet of things (IoT) service providing system according to an embodiment of the inventive concept;
FIG. 2 is a block diagram of a standalone IoT gateway according to an embodiment of the inventive concept;
FIG. 3 illustrates the configuration of an IoT service providing system according to an embodiment of the inventive concept;
FIG. 4 illustrates the detailed configuration of two IoT gateways included in the IoT service providing system of FIG. 3;
FIG. 5 is a system diagram illustrating a standalone IoT gateway according to an embodiment of the inventive concept;
FIG. 6 is a flowchart illustrating a method of providing an IoT device-related service according to an embodiment of the inventive concept; and
FIGS. 7 through 9 are flowcharts illustrating, in detail, the method of providing an IoT device-related service of FIG. 6.

### DETAILED DESCRIPTION

Hereinafter, preferred embodiments of the present invention will be described with reference to the attached drawings. Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like numbers refer to like elements throughout.

Unless otherwise defined, all terms including technical and scientific terms used herein have the same meaning as commonly understood by one of ordinary skill in the art to which this invention belongs. Further, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. The terms used herein are for the purpose of describing particular embodiments only and is not intended to be limiting. As used herein, the singular forms are intended to include the plural forms as well, unless the context clearly indicates otherwise.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, embodiments of the inventive concept will be described in greater detail with reference to the attached drawings.

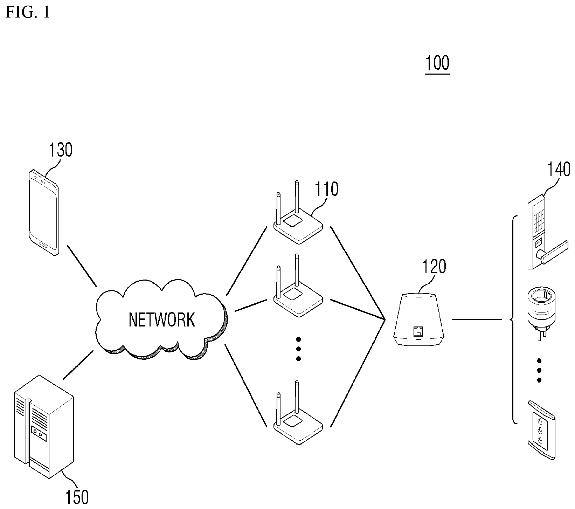

FIG. 1 illustrates the configuration of an Internet of things (IoT) service providing system 100 according to an embodiment of the inventive concept.

Referring to FIG. 1, the IoT service providing system 100 according to the current embodiment may include a router 110, a standalone IoT gateway 120, a smart device 130, a plurality of IoT devices 140, and a management server 150.

First, the router 110 connects the smart device 130 or the management server 150 to the standalone IoT gateway 120. To this end, the router 110 is connected to the smart device 130 via a wired network or a wireless network and is connected to the standalone IoT gateway 120 via a wired network or a wireless network. Here, the IoT service providing system 100 may include a plurality of routers 110 as illustrated in FIG. 1, but may also include only one router 110. The router 110 may be an access point or a wireless router in some examples.

When a connection request to a wired network or a wireless network is received from the standalone IoT gateway 120, the router 110 allocates any one of predetermined Internet protocol (IP) bands to the standalone IoT gateway 120, so that the IoT gateway 120 can connect to the router 110 through the IP band.

The standalone IoT gateway 120 connects one or more IoT devices 140 to the smart device 130 or the management server 150 via the router 110. To this end, the standalone IoT gateway 120 is connected to the router 110 via a wired network or a wireless network. In addition, the standalone IoT gateway 120 is paired with the IoT devices 140 and communicates with the IoT devices 140 according to a communication method supported by the IoT devices 140.

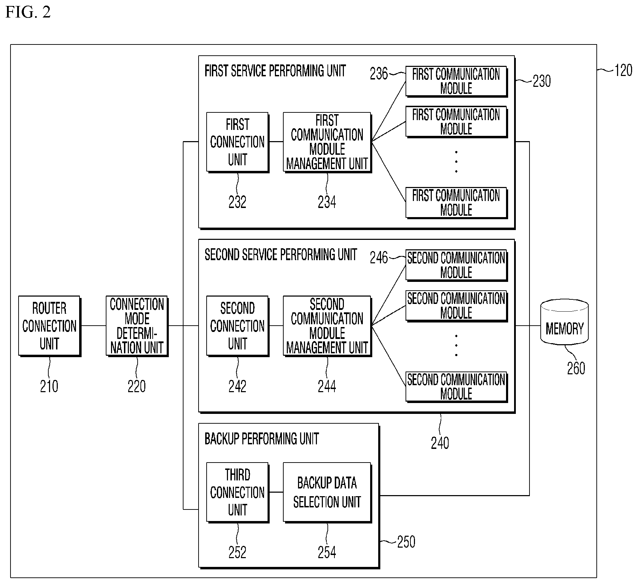

The configuration and operation of a standalone IoT gateway 120 according to an embodiment of the inventive concept will now be described with reference to FIG. 2.

Referring to FIG. 2, the standalone IoT gateway 120 according to the current embodiment includes a router connection unit 210, a connection mode determination unit 220, a first service performing unit 230, and a memory 260. In some embodiments, the standalone IoT gateway 120 according to the current embodiment may further include a backup performing unit 250 and a second service performing unit 240.

The router connection unit 210 connects to a router 110 using connection information of the router 110. In an embodiment, the router connection unit 210 may search a memory 260 to obtain connection information of a router 110 to which the standalone IoT gateway 120 last connected. The router connection unit 210 transmits a connection request to the last connected router 110 by transmitting the connection information of the router 110 to the router 110. Accordingly, an IP band is allocated by the router 110, and the router connection unit 210 connects to the router 110 through the allocated IP band in a Wi-Fi manner. The router connection unit 210 may be a Wi-Fi interface connected to the router 110 through wireless communication.

In an embodiment, the router connection unit 210 may obtain connection information of a router 110 preset or selected by a user. The router connection unit 210 transmits a connection request to the router 110 by transmitting the connection information of the router 110 to the router 110. Accordingly, an IP band is allocated by the router 110, and the router connection unit 210 connects to the router 110 through the allocated IP band in a Wi-Fi manner.

Here, the router to which the standalone IoT gateway 120 last connected may be the same router as the above router 110 or may be a router different from the above router 110.

The connection mode determination unit 220 determines one of a first connection mode and a second connection mode. The connection mode determination unit 220 may determine one of the first connection mode and the second connection mode according to a device connected through the router 110. The first connection mode is an operation mode used when the smart device 130 is connected through the router 110. The second connection mode is an operation mode used when the management server 150 is connected through the router 110. That is, the connection mode determination unit 220 may determine that the standalone IoT gateway 120 will operate in the first connection mode when a device connected through the router 110 is the smart device 130 and determine that the standalone IoT gateway 120 will operate in the second connection mode when the device connected through the router 110 is the management server 150.

The connection mode determination unit 220 may initially set the first connection mode as a connection mode. Then, the connection mode determination unit 220 may automatically change the connection mode from the first connection mode to the second connection mode or from the second connection mode to the first connection mode when a predetermined condition is satisfied.

In an embodiment, the connection mode determination unit 220 may change the connection mode from the first connection mode to the second connection mode when a backup condition preset by the user is satisfied.

For example, the user may set the completion of a predetermined period as the backup condition. In this case, the connection mode determination unit 220 may transmit backup data to the management server 150 at intervals set by the user by changing the connection mode from the first connection mode to the second connection mode at the set intervals.

For another example, the user may set the backup condition using data related to a specific IoT device 140. In an example, the connection mode determination unit 220 may change the connection mode from the first connection mode to the second connection mode whenever data related to a specific IoT device 140 set by the user is stored in the memory 260.

For another example, the user may set a case where a space in which data is stored in the memory 260 exceeds a threshold value as the backup condition. In this case, if the space in which data is stored in the memory 260 exceeds the threshold value (i.e., if a free area where data can be stored is reduced to a predetermined size or less), the connection mode determination unit 220 may change the connection mode from the first connection mode to the second connection mode.

For another example, when the remaining battery level of the standalone IoT gateway 120 is lower than a reference level, the connection mode determination unit 220 may change the connection mode from the first connection mode to the second connection mode so as to transmit backup data to the management server 150. By doing so, it is possible to prevent data stored in the standalone IoT gateway 120 from being lost due to battery discharge when the standalone IoT gateway 120 using a battery as a power source is utilized.

In an embodiment, the connection mode determination unit 220 may change the connection mode from the first connection mode to the second connection mode when a connection mode change condition preset by the user is satisfied.

For example, the user may set the reception of a connection request from the management server 150 as the connection mode change condition. In this case, the connection mode determination unit 220 may change the connection mode from the first connection mode to the second connection mode when a connection request is received from the management server 150.

For another example, the user may set the reception of a change request from the smart device 130 as the connection mode change condition. In this case, the connection mode determination unit 220 may change the connection mode from the first connection mode to the second connection mode when a connection mode change request is received from the smart device 130.

For another example, the user may set connection to a specific IoT device among the IoT devices 140 as the connection mode change condition. In this case, the connection mode determination unit 220 may change the connection mode from the first connection mode to the second connection mode when receiving a status message of the specific IoT device, so that the status message of the specific IoT device can be transmitted to the management server 150 as quickly as possible. In addition, in some embodiments, the connection mode determination unit 220 may change the connection mode from the second connection mode to the first connection mode when receiving a status message of another specific IoT device, so that the status message of the specific IoT device can be transmitted to the smart device 130 as quickly as possible.

When determining the connection mode of the standalone IoT gateway 120 to be the first connection mode, the connection mode determination unit 220 activates the first service performing unit 230 in order to provide an IoT service by connecting the standalone IoT gateway 120 to the smart device 130. In addition, when changing the connection mode of the standalone IoT gateway 120 to the second connection mode because a connection mode change condition is satisfied, the connection mode determination unit 220 activates the second service performing unit 240 in order to provide an IoT service by connecting the standalone IoT gateway 120 to the management server 150. In addition, when changing the connection mode of the standalone IoT gateway 120 to the second connection mode because a backup condition is satisfied, the connection mode determination unit 220 activates the backup performing unit 250 in order to perform backup by connecting the standalone IoT gateway 120 to the management server 150.

The first service performing unit 230 is activated by the connection mode determination unit 220 to perform a first service when the connection mode of the standalone IoT gateway 120 is determined to be the first connection mode. Specifically, the first service performing unit 230 transmits status messages of one or more IoT devices 140 obtained from the IoT devices 140 to the smart device 130 through the router 110. In addition, the first service performing unit 230 receives control commands for the IoT devices 140 from the smart device 130 through the router 110 and transmits the control commands to the IoT devices 140.

To this end, the first service performing unit 230 according to the inventive concept includes one or more first communication module 236 for communication with the IoT devices 140, a first communication module management unit 234, and a first connection unit 232.

Each of the first communication modules 236 is paired with an IoT device 140 to receive a status message about the status of the IoT device 140 from the IoT device 140. Each of the first communication modules 236 transmits the received status message to the first communication module management unit 234.

In addition, each of the first communication modules 236 transmits a control command received through the first communication module management unit 234 to a corresponding IoT device 140.

As illustrated in FIG. 2, the standalone IoT gateway 120 may include a plurality of first communication modules 236. In this case, some of the first communication modules 236 and the rest of the first communication modules 236 may support different communication methods. For example, each of the first communication modules 236 may support one of communication protocols such as Zigbee, Z-Wave, Bluetooth, Beacon, Wi-Fi, and Bluetooth Low Energy (BLE).

The first communication module management unit 234 performs pairing between each of the first communication modules 236 and an IoT device 140. Specifically, the first communication module management unit 234 according to the inventive concept pairs each of the first communication modules 236 capable of communicating with the IoT devices 140 with a corresponding IoT device 140.

For pairing between the IoT devices 140 and the first communication modules 236, the first communication module management unit 234 sets each of the first communication modules 236 to a pairing mode when the standalone IoT gateway 120 is connected to the router 110 and pairs each of the first communication modules 236 with a corresponding IoT device 140 when each of the IoT devices 140 is set to the pairing mode by the user. In an embodiment, the first communication module management unit 234 may set the first communication modules 236 to the pairing mode when a pairing command is received from the smart device 130 of the user through the router 110.

Meanwhile, when receiving a status message of an IoT device 140 from each first communication module 236, the first communication module management unit 234 transmits the status message to the first connection unit 232. In addition, when receiving a control command for an IoT device 140 from the first connection unit 232, the first communication module management unit 234 selects a first communication module 236 to which the received control command should be transmitted from among the first communication modules 236. In addition, the first communication module management unit 234 changes the received control command into a form that can be processed by the selected first communication module 236 and then transmits the changed control command to the selected first communication module 236.

The first communication module management unit 234 may include a software functional unit implemented to perform functions of a message queuing telemetry transport (MQTT) broker. The operation of the MQTT broker will now be described.

In an operation of transmitting a status message of an IoT device 140 to the smart device 130, if each IoT device 140 is registered as a publisher and assigned a topic, the smart device 130 wishing to receive a status message of an IoT device 140 allocated a topic may subscribe to the topic. This is a basic architecture. Here, when a status message is received from an IoT device 140, the MQTT broker transmits a topic assigned to the IoT device 140 and the status message to an entity (i.e., the smart device 130 wishing to receive the status message of the IoT device 140).

Conversely, an operation of receiving a control command for an IoT device 140 to the smart device 130 and transmitting the control command to the IoT device 140 may also be implemented by the operation of the MQTT broker. When a control command for a specific IoT device 140 is received from the smart device 130, it is processed as a publication request including a topic indicating the target IoT device 140 of the control command and the control command. Each IoT device 140 is treated as having subscribed to a topic that indicates itself. Consequently, each IoT device 140 can securely receive a control command for itself.

The MQTT broker stably transmits messages even on low-end electronic devices. Therefore, using this point, the IoT gateway 120 can stably transmit a status message received from an IoT device 140 to the smart device 130 wishing to receive the status message and can also stably transmit a control command for a specific IoT device 140 to the IoT device 140.

The second service performing unit 240 which will be described later is not provided with an MQTT broker. The second service performing unit 240 only plays the role of transmitting status data received from an IoT device 140 to the management server 150 and transmitting a control command received from the management server 150 to a corresponding IoT device 140.

For example, the first communication module management unit 234 parses a received control command to determine a first communication module 236 to which the control command should be transmitted and a communication protocol supported by the first communication module 236, converts the received control command into the form of the communication protocol supported by the first communication module 236, and then provides the converted control command to the first communication module 236.

The first connection unit 232 is connected to the smart device 130 via the router 110. When receiving status messages of the IoT devices 140 from the first communication module management unit 234, the first connection unit 232 changes the status messages into a first data format that can be processed by the smart device 130 and then transmits the changed status messages to the smart device 130 through the router 110. In addition, when receiving control commands for the IoT devices 140 from the smart device 130 through the router 110, the first connection unit 232 transmits the received control commands to the first communication module management unit 234.

In the IoT service providing system 100 illustrated in FIG. 1, the standalone IoT gateway 120 and the smart device 130 are directly connected to each other without via the management server 150 to exchange status messages of the IoT devices 140 and control commands for the IoT devices 140. Accordingly, the speed of data transmission/ reception between the IoT devices 140 and the smart device 130 in the IoT service providing system 100 will increase compared to the conventional art in which the standalone IoT gateway 120 and the smart device 130 are connected via the management server 150. In addition, the construction and maintenance cost of the management server 150 can be saved, the cost required for storing various data collected from the IoT devices 140 in the management server 150 can be saved, and the risk that various data collected from the IoT devices 140 will be leaked from the management server 150 by hacking or the like can be lowered.

Unlike in FIG. 2, only the first service performing unit 230 for providing the first service when the standalone IoT gateway 120 according to the embodiment of the inventive concept and the smart device 130 are directly connected to each other may be provided, and the second service performing unit 240 may not be provided.

The IoT service providing system 100 according to the embodiment of the inventive concept may, as illustrated in FIG. 2, include the second service performing unit 240 for providing a second service when the standalone IoT gateway 120 is connected to the smart device 130 via the management server 150 at the user's option.

When the connection mode of the standalone IoT gateway 120 is determined to be the second connection mode because a connection mode change condition is satisfied, the second service performing unit 240 is activated by the connection mode determination unit 220 to perform the second service. Specifically, the second service performing unit 240 transmits status messages of one or more IoT devices 140 obtained from the IoT devices 140 to the management server 150 through the router 110. In addition, the second service performing unit 240 receives control commands for the IoT devices 140 from the management server 150 through the router 110 and transmits the control commands to the IoT devices 140.

To this end, the second service performing unit 240 according to the inventive concept includes one or more second communication modules 246 for communication with the IoT devices 140, a second communication module managing unit 244, and a second connection unit 242.

Each of the second communication modules 246 is paired with an IoT device 140 to receive a status message about the status of the IoT device 140 from the IoT device 140. Each of the second communication modules 246 transmits the received status message to the second communication module management unit 244.

In addition, each of the second communication modules 246 transmits a control command received through the second communication module management unit 244 to a corresponding IoT device 140.

As illustrated in FIG. 2, the standalone IoT gateway 120 may include a plurality of second communication modules 246. In this case, some of the second communication modules 246 and the rest of the second communication modules 246 may support different communication methods. For example, each of the second communication modules 246 may support one of communication protocols such as Zigbee, Z-Wave, Bluetooth, Beacon, Wi-Fi, and BLE.

In FIG. 2, the first communication modules 236 and the second communication modules 246 are physically separate modules. However, this is only for ease of understanding. In some embodiments, the standalone IoT gateway 120 may include one or more communication modules of a first communication method and one or more communication modules of a second communication method (if necessary, may further include some of one or more communication interfaces of a third communication method and one or more communication interfaces of a fourth communication method). The communication modules may operate as the first communication modules 236 when the connection mode of the standalone IoT gateway 120 is the first connection mode and operate as the second communication modules 246 when the connection mode of the standalone IoT gateway 120 is the second connection mode.

The second communication module management unit 244 performs pairing between each of the second communication modules 246 and an IoT device 140. Specifically, the second communication module management unit 244 according to the inventive concept pairs each of the second communication modules 246 capable of communicating with the IoT devices 140 with a corresponding IoT device 140.

For pairing between the IoT devices 140 and the second communication modules 246, the second communication module management unit 244 sets each of the second communication modules 246 to a pairing mode when the standalone IoT gateway 120 is connected to the router 110 and pairs each of the second communication modules 246 with a corresponding IoT device 140 when each of the IoT devices 140 is set to the pairing mode by the user. In an embodiment, the second communication module management unit 244 may set the second communication modules 246 to the pairing mode when a pairing command is received from the smart device 130 of the user through the router 110.

Meanwhile, when receiving a status message of an IoT device 140 from each second communication module 246, the second communication module management unit 244 transmits the status message to the second connection unit 242. In addition, when receiving a control command for an IoT device 140 from the second connection unit 242, the second communication module management unit 244 selects a second communication module 246 to which the received control command should be transmitted from among the second communication modules 246. In addition, the second communication module management unit 244 changes the received control command into a form that can be processed by the selected second communication module 246 and then transmits the changed control command to the selected second communication module 246.

For example, the second communication module management unit 244 parses a received control command to determine a second communication module 246 to which the control command should be transmitted and a communication protocol supported by the second communication module 246, converts the received control command into the form of the communication protocol supported by the second communication module 246, and then provides the converted control command to the second communication module 246.

In an embodiment, as described above, the second communication modules 246 may be physically the same communication modules as the first communication modules 236. In this case, the second communication module management unit 244 for controlling the second communication modules 246 may have the same configuration as the first communication module management unit 234 for controlling the first communication modules 236.

In an embodiment, the second communication modules 246 may be physically separate communication modules from the first communication modules 236. In this case, the second communication modules 246 may be connected to at least one of a plurality of IoT devices 140, and the first communication modules 236 may be connected to the rest of the IoT devices 140. For example, when the IoT service providing system 100 includes six IoT devices 140, the second communication modules 246 may communicate with two of the six IoT devices 140, and the first communication modules 236 may communicate with the remaining four IoT devices 140.

The second connection unit 242 is connected to the management server 150 via the router 110. When receiving status messages of the IoT devices 140 from the second communication module management unit 244, the second connection unit 242 changes the status messages into a second data format that can be processed by the management server 150 and then transmits the changed status messages to the management server 150 through the router 110. In addition, when receiving control commands for the IoT devices 140 from the management server 150 through the router 110, the second connection unit 242 transmits the received control commands to the second communication module management unit 244.

The standalone IoT gateway 120 according to the embodiment of the inventive concept can satisfy the needs of the user who desires to receive a stable service by further including the second service performing unit 240. That is, when the direct connection between the standalone IoT gateway 120 and the smart device 130 is difficult or delayed, the IoT service providing system 100 connects the standalone IoT gateway 120 and the smart device 130 via the management server 150 so as to seamlessly and stably provide a service.

Status messages obtained from the IoT devices 140 or control commands for the IoT devices 140 are recorded in the memory 260. When receiving status messages from a plurality of IoT devices 140, the first service performing unit 230 stores the status messages in the memory 260. In addition, when receiving control commands for the IoT devices 140 from the smart device 130 through the router 110, the first service performing unit 230 stores the control commands in the memory 260.

When receiving status messages from the IoT devices 140, the second service performing unit 240 may store the status messages in the memory 260. In addition, when receiving control commands for the IoT devices 140 from the management server 150 through the router 110, the second service performing unit 240 may store the control commands in the memory 260.

The second service performing unit 240 transmits status messages received from the IoT devices 140 to the management server 150 and receives control commands for the IoT devices 140 from the management server 150. That is, messages or commands transmitted or received by the second service performing unit 240 are already stored in a database (not illustrated) of the management server 150. For this reason, the messages or commands transmitted or received by the second service performing unit 240 may not need to be stored in the memory 260 of the standalone IoT gateway 120.

The capacity of the memory 260 included in the standalone IoT gateway 120 may be insufficient to continuously accumulate status messages received from the IoT devices 140. Accordingly, the standalone IoT gateway 120 may further include the backup performing unit 250 which transmits backup data to the management server 150.

When the connection mode of the standalone IoT gateway 120 is determined to be the second connection mode because a backup condition is satisfied, the backup performing unit 250 is activated by the connection mode determination unit 220 to perform backup. Specifically, the backup performing unit 250 transmits some of the data stored in the memory 260 to the management server 150 through the router 110.

The backup performing unit 250 may include a backup data selection unit 254 and a third connection unit 252. The backup data selection unit 254 selects some of the data stored in the memory 260 as backup data when the connection mode of the standalone IoT gateway 120 is determined to be the second connection mode because a backup condition is satisfied. The backup data selection unit 254 transmits the selected backup data to the third connection unit 252.

The backup data selection unit 254 selects at least some of the data stored in the memory 260 as backup data and transmits the backup data to the management server 150. In some embodiments, the backup data selection unit 254 may form the backup data by selecting only some of the data stored in the memory 260. For example, if it is difficult to transmit all of the data stored in the memory 260 to the management server 150 because the remaining battery power is too low or if only some of the data stored in the memory 260 should be backed up according to the setting by the user, the backup data selection unit 254 forms the backup data by selecting only some of the data stored in the memory 260. This can save the usage fee of a storage space included in the management server 150 and bring about some additional effects. In relation to the some additional effects, some embodiments in which the backup data is constructed will now be described.

In an embodiment, status messages obtained from some of a plurality of IoT devices 140 connected to the standalone IoT gateway 120 and/or control commands for the some IoT devices 140 may form backup data. The some IoT devices may be designated by the user or may be top N IoT devices (where N is a value designated by the user or a default value) in order of highest to lowest priority assigned to the type of IoT device. According to the current embodiment, while the user is checking status messages obtained from his or her IoT devices 140 or controlling his or her IoT devices 140 by connecting directly to the standalone IoT gateway 120 without via the management server 150, if a situation where a backup condition is satisfied occurs, important IoT device-related data that must not be lost may be safely backed up to the management server 150, thereby ensuring stability.

In an embodiment, of status messages obtained from a plurality of IoT devices 140 connected to the standalone IoT gateway 120, only status messages irrelevant to the user's personal information may form backup data. For example, if the obtained status messages include indoor temperature information, indoor humidity information, indoor electricity usage information, and the user's blood pressure information, only the indoor temperature information, the indoor humidity information and the indoor electricity usage information excluding the blood pressure information, which is the user's personal information, may form the backup data. According to the current embodiment, the user's personal information which has a great ripple effect when leaked to the outside may be stored only in the standalone IoT gateway 120 and fundamentally prevented from being leaked by hacking or the like.

The third connection unit 252 is connected to the management server 150 via the router 110. When receiving backup data from the backup data selection unit 254, the third connection unit 252 changes the backup data into the second data format that can be processed by the management server 150 and then transmits the changed backup data to the management server 150 through the router 110.

Until now, the backup-related embodiments of the standalone IoT gateway 120 according to the current embodiment have been described. It can be understood that since there is a limit to the storage capacity of the memory 260 included in the IoT gateway 120, at least some of the data stored in the memory 260 are archived in the management server 150 to prevent the loss of the data.

Although not illustrated in FIG. 2, the standalone IoT gateway 120 according to the current embodiment may also transmit a fault diagnosis message to the management server 150. The fault diagnosis message may be transmitted to the management server 150 in response to a fault diagnosis request message received from the management server 150, may be transmitted to the management server 150 as a result of self-diagnostic logic performed by the standalone IoT gateway 120 itself due to the arrival of a fault diagnosis cycle, or may be transmitted to the management server 150 as a result of self-diagnostic logic performed by the standalone IoT gateway 120 itself in response to the occurrence of some pre-specified events requiring fault diagnosis. The self-fault diagnosis message contains information about the result of a fault diagnosis, for example, information needed to determine whether the data processing speed of the standalone IoT gateway 120 has increased or whether the standalone IoT gateway 120 is unable to process data.

In some embodiments, the fault diagnosis message may contain information about the execution environment of the standalone IoT gateway 120, such as random access memory (RAM) usage or central processing unit (CPU) temperature. The management server 150 may determine whether a fault has occurred in the standalone IoT gateway 120 based on the fault diagnosis message received from the standalone IoT gateway 120. The management server 150 may determine that a fault has occurred in the standalone IoT gateway 120 when the RAM usage exceeds a threshold value or when the CPU temperature exceeds a threshold value.

For another example, the fault diagnosis message may contain fault occurrence information when the RAM usage or the CPU temperature exceeds a threshold value. That is, the standalone IoT gateway 120 may determine, by itself, whether a fault has occurred, and, if the fault has occurred, transmit the fault occurrence information to the management server 150.

Referring back to FIG. 1, the smart device 130 of the user is connected to the standalone IoT gateway 120 through the router 110 without via the management server 150. The smart device 130 may be directly connected to the router 110 (e.g., if the router 110 is acting as an access point) or may be connected to the router 110 via a network such as the Internet. The smart device 130 of the user may be provided with an application for connection to the standalone IoT gateway 120.

When it is determined that the standalone IoT gateway 120 is connected to the router 110, the smart device 130 of the user generates a pairing command using the application installed in the smart device 130 and transmits the pairing command to the standalone IoT gateway 120 in order for pairing between the IoT devices 140 and the standalone IoT gateway 120. To this end, the smart device 130 of the user transmits the router pairing command to the router-independent IoT gateway 120 using the installed application.

In addition, the smart device 130 of the user generates control commands for controlling the IoT devices 140 by using the installed application and transmits the control commands to the standalone IoT gateway 120 through the router 110 by directly connecting to the router 110. The smart device 130 of the user receives status messages of the IoT devices 140 from the standalone IoT gateway 120 through the router 110 and provides the received status messages to the user.

That is, control commands generated by the smart device 130 of the user are transmitted to the standalone IoT gateway 120 through the router 110, and status messages of the IoT devices 140 collected by the standalone IoT gateway 120 are provided to the smart device 130 of the user through the router 110.

The smart device 130 of the user may control the IoT devices 140 using an IoT device management service provided by the management server 150 or query status information or measurement information generated by the IoT devices 140.

In an embodiment, the smart device 130 of the user may connect to the management server 150 at the user's option. In an embodiment, when failing to connect to the standalone IoT gateway 120, the smart device 130 of the user may automatically connect to the management server 150 as a workaround. Specifically, the smart device 130 of the user may transmit a connection request message to the standalone IoT gateway 120. If a response message to the connection request is received from the standalone IoT gateway 120 within a predetermined time, the smart device 130 of the user may directly connect to the router 110. On the other hand, if the response message to the connection request is not received from the standalone IoT gateway 120 within the predetermined time, the smart device 130 of the user may transmit a connection request message to the management server 150. The smart device 130 of the user may connect to the management server 150 if a response message to the connection request is received from the management server 150 within the predetermined time.

In an embodiment, the smart device 130 may be implemented as a smart watch, a smartphone, or a tablet PC.

Each IoT device 140 operates according to a control command received from the standalone IoT gateway 120, generates a status message about its own status, and periodically or non-periodically transmits the status message to the standalone IoT gateway 120. To this end, a communication module (not illustrated) for communication with the standalone IoT gateway 120 is built in each IoT device 140, and the built-in communication module is paired with a first communication module 236 and second communication module 246 of the standalone IoT gateway 120.

Each IoT device 140 may be a door lock, an IoT switch, an IoT sensor, a CCTV, a gas valve, a lighting controller, an IoT plug, a TV, a refrigerator, or an audio player.

The management server 150 receives status data of the IoT devices 140 from the standalone IoT gateway 120 through the router 110 and directly processes the status data or provides the status data to the smart device 130 of the user. In addition, when receiving control commands for controlling the IoT devices 140 from the smart device 130 of the user, the management server 150 transmits the control commands to the standalone IoT gateway 120 through the router 110.

In addition, the management server 150 stores backup data received from the standalone IoT gateway 120 through the router 110 in the database (not illustrated).

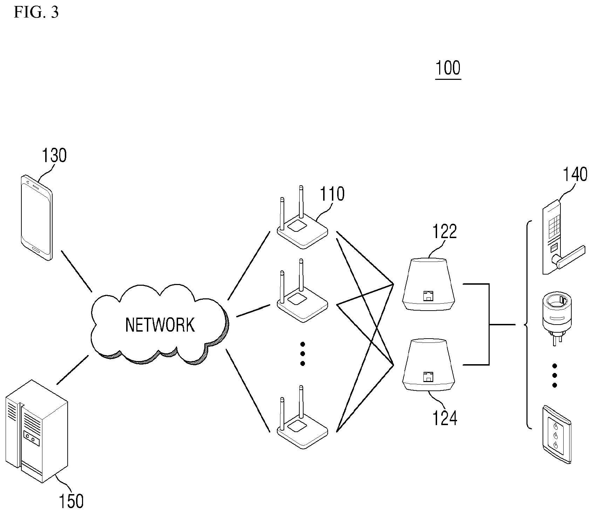

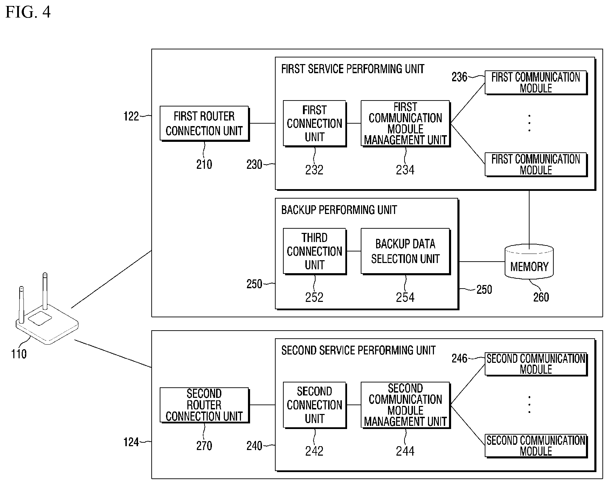

In an IoT service providing system 100 according to an embodiment of the inventive concept, the first service performing unit 230 and the second service performing unit 240 may be included in separate gateways, respectively. This will now be described in detail with reference to FIGS. 3 and 4.

FIG. 3 illustrates the configuration of an IoT service providing system 100 according to an embodiment of the inventive concept.

Referring to FIG. 3, the IoT service providing system 100 according to the current embodiment may include a router 110, a first gateway 122, a second gateway 124, a smart device 130, a plurality of IoT devices 140, and a management server 150. The operations of the router 110, the smart device 130, the IoT devices 140 and the management server 150 included in the IoT service providing system 100 of FIG. 3 are substantially similar to those of the router 110, the smart device 130, the IoT devices 140 and the management server 150 described above with reference to FIGS. 1 and 2, and thus their redundant description will be omitted.

The first gateway 122 connects one or more IoT devices 140 to the smart device 130 via the router 110. To this end, the first gateway 122 is connected to the router 110 via a wired network or a wireless network. In addition, the first gateway 122 is paired with the IoT devices 140 and communicates with the IoT devices 140 according to a communication method supported by the IoT devices 140.

The second gateway 124 connects one or more IoT devices 140 to the management server 150 via the router 110. To this end, the second gateway 124 is connected to the router 110 via a wired network or a wireless network. In addition, the second gateway 124 is paired with the IoT devices 140 and communicates with the IoT devices 140 according to a communication method supported by the IoT devices 140.

The configurations of the first gateway 122 and the second gateway 124 will now be described in more detail with reference to FIG. 4.

The first gateway 122 transmits status messages of a plurality of IoT devices 140 directly to the smart device 130 through the router 110 or receives control commands for the IoT devices 140 directly from the smart device 130. When the first gateway 122 transmits or receives data 'directly' to or from the smart device 130, it may be understood to mean that the data is transmitted or received without via the management server 150.

The first gateway 122 includes a first router connection unit 210, a first service performing unit 230, and a memory 260. In some embodiments, the first gateway 122 according to the current embodiment may further include a backup performing unit 250. The operations of the first router connection unit 210, the backup performing unit 250 and the memory 260 can be understood from the operations of the router connection unit 210, the backup performing unit 250 and the memory 260 described above with reference to FIG. 2, and thus their redundant description will be omitted.

The first service performing unit 230 of the standalone IoT gateway 120 described above with reference to FIG. 2 is activated to operate when the connection mode determination unit 220 determines the connection mode to be the first connection mode. On the other hand, the first service performing unit 230 of the first gateway 122 illustrated in FIG. 4 performs a first service when the first gateway 122 is connected to the router 110 by the first router connection unit 210. Except for this difference, the operation and configuration of the first service performing unit 230 of the first gateway 122 are the same as those of the first service performing unit 230 of the standalone IoT gateway 120, and thus their redundant description will be omitted.

The second gateway 124 is a device activated when an error occurs in the first gateway 122. The second gateway 124 before activation may perform only an operation of monitoring whether the first gateway 122 is operating normally or an operation of receiving an activation control signal.

The monitoring may be performed periodically. If the normal operation of the first gateway 122 is confirmed by the monitoring, the second gateway 124 may enter a sleep state to minimize power consumption. Since the second gateway 124 is a kind of auxiliary gateway, it may be desirable, in terms of usability, for the second gateway 124 to operate based on battery power without being supplied with regular power. Since the second gateway 124 performs only monitoring of the first gateway 122, it will be able to operate normally for a long time only with the battery power.

The second gateway 124 may perform the monitoring using various methods. For example, the second gateway 124 may determine that an error has occurred in the first gateway 122 if a heartbeat signal received from the first gateway 122 through peer-to-peer (p2p) communication is not received for more than a defined period of time, if there is no data transmission and reception history recorded in the router 110 for more than a defined period of time as a result of checking a history of data transmission and reception between the first gateway 122 and the router 110, or if a first gateway abnormal message recorded in a predefined form in the router 110 is identified.

When it is determined that the first gateway 122 is not operating normally, the second gateway 124 is activated to transmit status messages of the IoT devices 140 to the management server 150 through the router 110 or receive control commands for the IoT devices 140 from the management server 150.

The second gateway 124 according to the current embodiment includes a second router connection unit 270 and a second service performing unit 240. The operation and configuration of the second service performing unit 240 can be understood from the operation and configuration of the second service performing unit 240 of the standalone IoT gateway 120 described above with reference to FIG. 2, and thus their redundant description will be omitted.

The second router connection 270 provides a communication connection to the router 110. For example, the second router connection unit 270 may be a Wi-Fi interface module that provides a connection to the router 110 including the function of an access point. The second router connection unit 270 may receive connection information about the router 110 connected to the first gateway 122 from the first gateway 122 through the p2p communication or store connection information received from an external device at initial setup in an internal storage medium (not illustrated). That is, by connecting to the router 110 using the connection information, the second router connection unit 270 can prevent, as much as possible, the instability of operation caused when connecting to a router whose connection continuity has not been confirmed.

In the IoT service providing system 100 described above with reference to FIGS. 3 and 4, the smart device 130 of a user can receive status data of the IoT devices 140 directly from the first gateway 122 without via the management server 150 or can directly control the IoT devices 140 through the first gateway 122. In addition, even when errors of various causes occur in the operation of the first gateway 122, a stable service can be provided through the second gateway 124.

Unlike the first gateway 122, the second gateway 124 does not store status data of the IoT devices 140 but transmits the status data received from the IoT devices 140 to the management server 150. In addition, unlike the first gateway 122, the second gateway 124 does not directly receive control commands for the IoT devices 140 from the smart device 130 of the user and interpret the control commands so that the IoT devices 140 are controlled according to the intention of the user. Instead, the second gateway 124 causes the IoT devices 140 to be controlled according to the intention of the user by using control commands generated by the management server 150. In this regard, the second gateway 124 performs only a limited function as compared with the first gateway 122. However, the addition of the second gateway 124 enables the user to be seamlessly provided with the function of controlling the IoT devices 140 and querying status values of the IoT devices 140 even when the first gateway 122 fails.

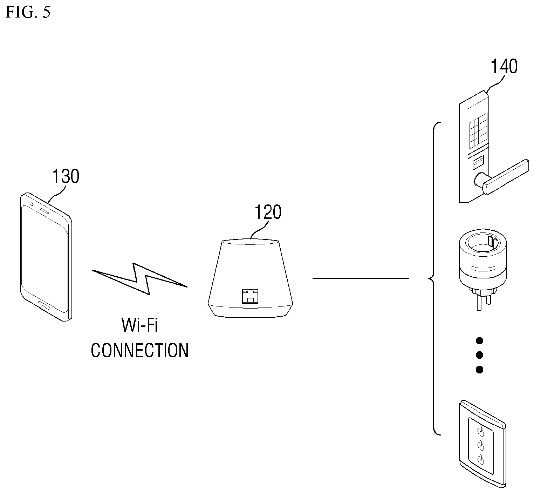

An IoT gateway according to an embodiment of the inventive concept will now be described with reference to FIG. 5. The IoT gateway according to the current embodiment can be directly connected to a smart device 130 of a user without via a router 110, unlike the IoT gateways described above with reference to FIGS. 1 through 4. That is, the IoT gateway according to the current embodiment partially functions as an access point. To this end, the IoT gateway according to the current embodiment may have a Wi-Fi host unit including a dynamic domain name system (DDNS) service module, a dynamic host configuration protocol (DHCP) service module, and a port forwarding service module. The IoT gateway according to the current embodiment may also have a wired local area network (LAN) port for Internet connection.

Since the IoT gateway according to the current embodiment does not need to function as a full-size access point, the Wi-Fi host unit may include only the DDNS service module, the DHCP service module, and the port forwarding service module. This is because if there are only the DDNS service module, the DHCP service module and the port forwarding service module, the smart device 130 can directly connect to the IoT gateway through Wi-Fi and transmit or receive data.

Since the IoT gateway according to the current embodiment has a Wi-Fi hosting function, a web user interface (UI) for configuration of the IoT gateway may be provided as an incidental effect. The smart device 130 may display a setting screen of the IoT gateway by accessing the address of the web UI. Through the setting screen, various setting functions may be provided, such as i) changing the connection mode of the IoT gateway, ii) setting a backup condition, iii) selecting an IoT device to be paired, and iv) performing user registration of the IoT gateway.

The current embodiment is advantageous in terms of ease of use and economy because it is possible to implement an IoT environment using the existing IoT devices as long as there is an IoT gateway device, despite the absence of a wired/wireless router.

The IoT gateway according to the current embodiment may include the Wi-Fi host unit which includes only the DDNS service module, the DHCP service module and the port forwarding service module and a first service performing unit which transmits status messages obtained from one or more IoT devices to a directly connected smart device through the Wi-Fi host unit or transmits control commands for the IoT devices received from the smart device to the IoT devices.

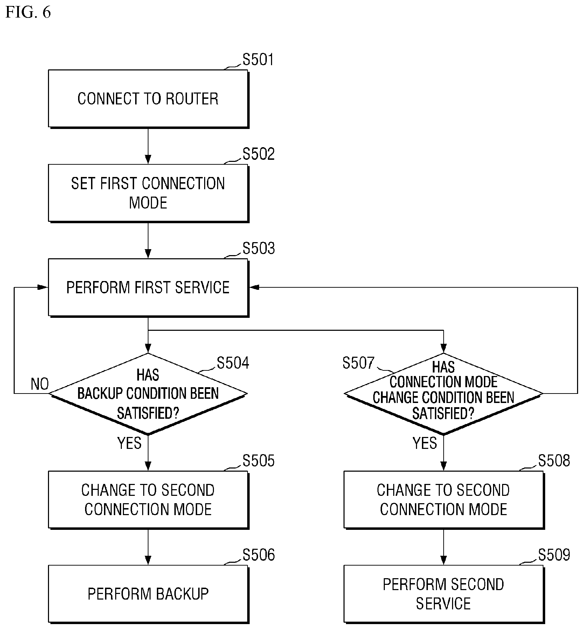

A method of providing an IoT device-related service according to an embodiment will now be described with reference to FIGS. 6 through 9.

The method illustrated in FIGS. 6 through 9 may be performed by an electronic device having data transmission/reception and data operation capability. The electronic device may be understood to be, for example, the standalone IoT gateway 120 illustrated in FIGS. 1 and 2.

First, referring to FIG. 6, a standalone IoT gateway 120 connects to a router 110 (operation S501).

The standalone IoT gateway 120 obtains connection information of the router 110. In an embodiment, the standalone IoT gateway 120 may obtain connection information of a router 110 to which the standalone IoT gateway 120 last connected. The standalone IoT gateway 120 may load the connection information of the router 110 to which the standalone IoT gateway 120 last connected from a memory 260. In an embodiment, the standalone IoT gateway 120 may obtain connection information about a router 110 preset or selected by a user.

The standalone IoT gateway 120 may transmit the connection information of the router 110 to the router 110 and connect to the router 110 after being allocated an IP band by the router 110.

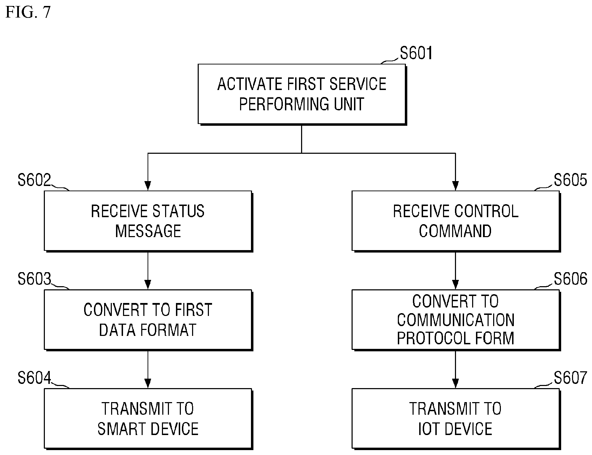

Then, the standalone IoT gateway 120 sets a connection mode to a first connection mode (operation S502) and provides a first IoT service between one or more IoT devices and a smart device (operation S503). Operations that may be performed in the process of providing the first IoT service will now be described with reference to FIG. 7.

Referring to FIG. 7, when a first service performing unit 230 is activated (operation S601), the standalone IoT gateway 120 receives a pairing command from a smart device 130 of the user through the router 110. The standalone IoT gateway 120 sets communication modules for communication with IoT devices 140 to be paired to a pairing mode according to the pairing command. When the IoT devices 140 to be paired are set to the pairing mode, the standalone IoT gateway 120 pairs the IoT device 140 set to the pairing mode with the communication modules, respectively.

Next, the standalone IoT gateway 120 periodically receives status messages from the paired IoT devices 140 (operation S602).

Then, the standalone IoT gateway 120 converts the received status messages into a first data format that can be processed by the smart device 130 (operation S603) and transmits the converted status messages to the smart device 130 through the router 110 (operation S604).

Meanwhile, the standalone IoT gateway 120 may receive control commands for controlling the IoT devices 140 from the smart device 130 through the router 110 (operation S605).

When a control command for an IoT device 140 is received from the router 110, the standalone IoT gateway 120 selects a communication module to which the control command should be transmitted from among the communication modules included in the standalone IoT gateway 120, converts the received control command into a form that can be processed by the selected communication module, and then transmits the converted control command to the selected communication module (operation S606).

For example, the standalone IoT gateway 120 parses a received control command to determine a communication module to which the control command should be transmitted and a communication protocol supported by the communication module, converts the received control command into the form of the communication protocol supported by the communication module, and then transmits the converted control command to the communication module.

Then, the standalone IoT gateway 120 transmits the converted control command to a corresponding IoT device 140 (operation S607).

Referring back to FIG. 6, the standalone IoT gateway 120 changes the connection mode from the first connection mode to a second connection mode when a connection mode change condition is satisfied (operations S507 and S508).

Here, the connection mode change condition may be preset by the user. For example, the user may set the reception of a connection request from a management server 150 as the connection mode change condition. In this case, the standalone IoT gateway 120 may change the connection mode from the first connection mode to the second connection mode when a connection request is received from the management server 150.

For another example, the user may set the reception of a change request from the smart device 130 as the connection mode change condition. In this case, the standalone IoT gateway 120 may change the connection mode from the first connection mode to the second connection mode when a connection mode change request is received from the smart device 130.

For another example, the user may set connection to specific IoT devices 140 among the IoT devices 140 as the connection mode change condition. In this case, the standalone IoT gateway 120 may change the connection mode from the first connection mode to the second connection mode when receiving status messages of the specific IoT devices 140.

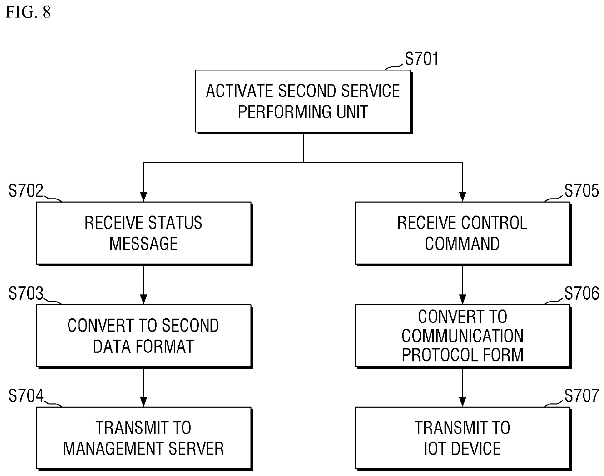

Next, when the connection mode is changed to the second connection mode, the standalone IoT gateway 120 provides a second IoT service (operation S509). Operations that may be performed in the process of providing the second IoT service will now be described with reference to FIG. 8.

Referring to FIG. 8, when a second service performing unit 240 is activated (operation S701), the standalone IoT gateway 120 receives a pairing command from the smart device 130 of the user through the router 110. The standalone IoT gateway 120 sets communication modules for communication with the IoT devices 140 to be paired to a pairing mode according to the pairing command. When the IoT devices 140 to be paired are set to the pairing mode, the standalone IoT gateway 120 pairs the IoT devices 140 set to the pairing mode with the communication modules, respectively.

Next, the standalone IoT gateway 120 periodically receives status messages from the paired IoT devices 140 (operation S702).

Then, the standalone IoT gateway 120 converts the received status messages into a second data format that can be processed by the management server 150 (operation S703) and transmits the converted status messages to the management server 150 through the router 110 (operation S704).

Meanwhile, the standalone IoT gateway 120 may receive control commands for controlling the IoT devices 140 from the management server 150 through the router 110 (operation S705).

When a control command for an IoT device 140 is received from the router 110, the standalone IoT gateway 120 selects a communication module to which the control command should be transmitted from among the communication modules included in the standalone IoT gateway 120, converts the received control command into a form that can be processed by the selected communication module, and then transmits the converted control command to the selected communication module (operation S706).

For example, the standalone IoT gateway 120 parses a received control command to determine a communication module to which the control command should be transmitted and a communication protocol supported by the communication module, converts the received control command into the form of the communication protocol supported by the communication module, and then transmits the converted control command to the communication module.

Then, the standalone IoT gateway 120 transmits the converted control command to a corresponding IoT device 140 (operation S707).

Referring back to FIG. 6, the standalone IoT gateway 120 changes the connection mode from the first connection mode to the second connection mode when a backup condition is satisfied (operations S504 and S505).

Here, the backup condition may be preset by the user. For example, the user may set the completion of a predetermined period as the backup condition, may set the backup condition using data related to a specific IoT device 140, or may set a case where a space in which data is stored in the memory 260 of the standalone IoT gateway 120 exceeds a threshold value as the backup condition.

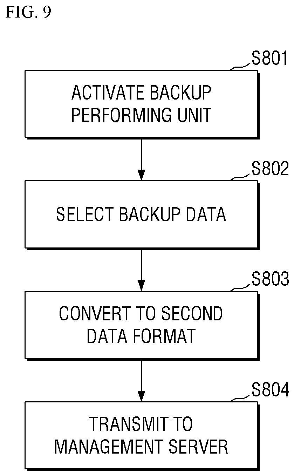

Then, when the connection mode is changed to the second connection mode, the standalone IoT gateway 120 performs backup (operation S506). Operations that may be performed in the backup process will now be described with reference to FIG. 9.

Referring to FIG. 9, when a backup performing unit 250 is activated (operation S801), it selects some of the data stored in the memory 260 as backup data (operation S802).

The backup performing unit 250 may select some of the status messages obtained from the IoT devices 140 and the control commands for the IoT devices 140 as backup data. In an embodiment, one or more status messages obtained from one or more pre-designated IoT devices among the IoT devices 140 connected to the standalone IoT gateway 120 and/or control commands for the pre-designated IoT devices may form backup data. In an embodiment, of the status messages obtained from the IoT devices 140 connected to the standalone IoT gateway 120, status messages irrelevant to the user's personal information may form backup data.

Then, the backup performing unit 250 converts the backup data into the second data format that can be processed by the management server 150 (operation S803) and transmits the converted backup data to the management server 150 through the router 110 (operation S804).

According to the inventive concept, a standalone IoT gateway and a smart device can be directly connected to exchange status messages and control commands using a local area communication technology without via a management server. Accordingly, an IoT service providing system according to the inventive concept provides an effect of increasing the speed of message transmission between IoT devices and the smart device.

In addition, according to the inventive concept, it is not necessary to construct an expensive server. Also, even if a management server is used, since only a minimum amount of data are stored in the management server, it is not necessary to install a large database. Accordingly, the IoT service providing system according to the inventive concept provides another effect of reducing the system construction cost.

In addition, according to the inventive concept, the possibility of leakage of personal information can be lowered because it is not necessary to use a server of another company.

In addition, according to the inventive concept, even if a server of another company is used, only some data selected by a user may be provided to a management server. Accordingly, a standalone IoT gateway according to the inventive concept can minimize the provision of personal information.

In addition, according to the inventive concept, since backup data can be stored and managed in a separate server, it is possible to prevent important data from being lost.

In addition, according to the inventive concept, since an IoT gateway directly provides a wireless Internet connection (e.g., Wi-Fi), a separate access point such as a wireless router is not required in addition to the IoT gateway. This brings about an improvement in terms of user convenience and economy. Also, since the IoT gateway provides the wireless Internet connection, a web UI can be set in the IoT gateway. Therefore, a user can easily set a function of the IoT gateway only by accessing the web UI without via a server.

The concepts of the invention described above with reference to FIGS. 3 to 7 can be embodied as computer-readable code on a computer-readable medium. The computer-readable medium may be, for example, a removable recording medium (a CD, a DVD, a Blu-ray disc, a USB storage device, or a removable hard disc) or a fixed recording medium (a ROM, a RAM, or a computer-embedded hard disc). The computer program recorded on the computer-readable recording medium may be transmitted to another computing apparatus via a network such as the Internet and installed in the computing apparatus. Hence, the computer program can be used in the computing apparatus.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

## Claims

1. A standalone Internet of things IoT gateway (120) comprising:
a connection mode determination unit (220) which determines one of a first connection mode and a second connection mode;
a first service performing unit (230) which transmits status messages obtained from one or more IoT devices (140) to a smart device (130) of a user through a router (110) or receives control commands for the IoT devices (140) from the smart device (130) of the user through the router (110) and transmits the received control commands to the IoT devices (140) when the first connection mode is determined as a connection mode; and
a second service performing unit (240) which transmits the status messages obtained from the IoT devices (140) to a management server (150) through the router (110) or receives the control commands for the IoT devices (140) from the management server (150) through the router (110) and transmits the received control commands to the IoT devices (140) when the second connection mode is determined as the connection mode.

2. The standalone IoT gateway (120) of claim 1, wherein the first service performing unit (230) converts the status messages obtained from the IoT devices (140) into a first data format that can be processed by the smart device (130) of the user and transmits the converted status messages to the smart device (130) of the user through the router (110), and the second service performing unit (240) converts the status messages obtained from the IoT devices (140) into a second data format that can be processed by the management server (150) and transmits the converted status messages to the management server (150) through the router (110).

3. The standalone IoT gateway (120) of claim 1, wherein the connection mode determination unit (220) initially determines the connection mode to be the first connection mode and changes the connection mode from the first connection mode to the second connection mode when a connection mode change condition is satisfied.

4. The standalone IoT gateway (120) of claim 1, further comprising:
a memory (260) which stores the status messages obtained from the IoT devices (140) and the control commands for the IoT devices (140); and
a backup performing unit (250) which transmits some of data stored in the memory (260) to the management server (150) through the router (110).

5. The standalone IoT gateway (120) of claim 4, wherein the connection mode determination unit (220) initially determines the connection mode to be the first connection mode and changes the connection mode from the first connection mode to the second connection mode when a backup condition is satisfied, and the backup performing unit (250) transmits some of the data stored in the memory (260) to the management server (150) through the router (110) when the connection mode is changed to the second connection mode.

6. The standalone IoT gateway (120) of claim 5, wherein the connection mode determination unit (220) sets a case where data related to a specific IoT device among the IoT devices (140) is stored in the memory (260) as the backup condition.

7. The standalone IoT gateway (120) of claim 4, wherein the connection mode determination unit (220) sets a case where a space in which data is stored in the memory (260) exceeds a threshold value as the backup condition.

8. The standalone IoT gateway (120) of claim 1, wherein the first service performing unit (230) comprises a first communication module (236) which is paired with at least one of the IoT devices (140) and connected to the at least one IoT device, and the second service performing unit (240) comprises a second communication module (246) which is paired with the rest of the IoT devices (140) and connected to the rest of the IoT devices (140).

9. The standalone IoT gateway (120) of claim 1, wherein the first service performing unit (230) comprises a message queuing telemetry transport MQTT broker which processes publisher registration and topic allocation for a first IoT device and performs subscription to a topic of the first IoT device for a smart device wishing to receive a status message of the first IoT device.

10. The standalone IoT gateway (120) of claim 1, wherein the first service performing unit (230) comprises an MQTT broker which, when a control command for the first IoT device is received, processes the control command as a publication request comprising the topic indicating the first IoT device and the control command.

11. The standalone IoT gateway (120) of claim 1, further comprising a Wi-Fi host unit which comprises a dynamic domain name system DDNS service module, a dynamic host configuration protocol DHCP service module, and a port forwarding service module.

12. The standalone IoT gateway (120) of claim 11, wherein the Wi-Fi host unit comprises only the DDNS service module, the DHCP service module, and the port forwarding service module.

13. A standalone IoT gateway (120) comprising:
a first gateway (122) which connects to a router (110) and transmits status messages obtained from one or more IoT devices (140) to a smart device (130) of a user through the router (110) or receives control commands for the IoT devices (140) from the smart device (130) of the user through the router (110) and transmits the received control commands to the IoT devices(140) ; and
a second gateway (124) which connects to the router (110) when an error occurs in the first gateway (122) and transmits the status messages obtained from the IoT devices (140) to a management server (150) through the router (110) or receives the control commands for the IoT devices (140) from the management server (150) through the router (110) and transmits the received control commands to the IoT devices (140).

14. The standalone IoT gateway of claim 13, wherein the second gateway (124) is activated when an error occurs in the first gateway (122) and is paired with the IoT devices (140).

## Patentansprüche

1. Unabhängiges Internet-der-Dinge- bzw. IoT(Internet of Things)-Gateway (120), das Folgendes umfasst:
eine Verbindungsmodusbestimmungseinheit (220), die entweder einen ersten Verbindungsmodus oder einen zweiten Verbindungsmodus bestimmt;
eine erste Dienstdurchführungseinheit (230), die von einer oder mehreren IoT-Vorrichtungen (140) erhaltene Statusnachrichten über einen Router (110) an eine Smart-Vorrichtung (130) eines Benutzers überträgt oder Steuerbefehle für die IoT-Vorrichtungen (140) von der Smart-Vorrichtung (130) des Benutzers über den Router (110) empfängt und die empfangenen Steuerbefehle an die IoT-Vorrichtungen (140) überträgt, wenn der erste Verbindungsmodus als ein Verbindungsmodus bestimmt wird; und
eine zweite Dienstdurchführungseinheit (240), die die von den IoT-Vorrichtungen (140) erhaltenen Statusnachrichten über den Router (110) an einen Management-Server (150) überträgt oder die Steuerbefehle für die IoT-Vorrichtungen (140) von dem Management-Server (150) über den Router (110) empfängt und die empfangenen Steuerbefehle an die IoT-Vorrichtungen (140) überträgt, wenn der zweite Verbindungsmodus als der Verbindungsmodus bestimmt wird.

2. Unabhängiges IoT-Gateway (120) nach Anspruch 1, wobei die erste Dienstdurchführungseinheit (230) die von den IoT-Vorrichtungen (140) erhaltenen Statusnachrichten in ein erstes Datenformat umwandelt, das durch die Smart-Vorrichtung (130) des Benutzers verarbeitet werden kann, und die umgewandelten Statusnachrichten über den Router (110) an die Smart-Vorrichtung (130) des Benutzers überträgt, und die zweite Dienstdurchführungseinheit (240) die von den IoT-Vorrichtungen (140) erhaltenen Statusnachrichten in ein zweites Datenformat umwandelt, das durch den Management-Server (150) verarbeitet werden kann, und die umgewandelten Statusnachrichten über den Router (110) an den Management-Server (150) überträgt.

3. Unabhängiges IoT-Gateway (120) nach Anspruch 1, wobei die Verbindungsmodusbestimmungseinheit (220) zunächst bestimmt, dass es sich bei dem Verbindungsmodus um den ersten Verbindungsmodus handelt, und den Verbindungsmodus von dem ersten Verbindungsmodus zu dem zweiten Verbindungsmodus ändert, wenn eine Verbindungsmodusänderungsbedingung erfüllt ist.

4. Unabhängiges IoT-Gateway (120) nach Anspruch 1, das ferner Folgendes umfasst:
einen Speicher (260), der die von den IoT-Vorrichtungen (140) erhaltenen Statusnachrichten und die Steuerbefehle für die IoT-Vorrichtungen (140) speichert; und
eine Sicherungsdurchführungseinheit (250), die einige der in dem Speicher (260) gespeicherten Daten über den Router (110) an den Management-Server (150) überträgt.

5. Unabhängiges IoT-Gateway (120) nach Anspruch 4, wobei die Verbindungsmodusbestimmungseinheit (220) zunächst bestimmt, dass es sich bei dem Verbindungsmodus um den ersten Verbindungsmodus handelt, und den Verbindungsmodus von dem ersten Verbindungsmodus zu dem zweiten Verbindungsmodus ändert, wenn eine Sicherungsbedingung erfüllt ist, und die Sicherungsdurchführungseinheit (250) einige der in dem Speicher (260) gespeicherten Daten über den Router (110) an den Management-Server (150) überträgt, wenn der Verbindungsmodus zu dem zweiten Verbindungsmodus geändert wird.

6. Unabhängiges IoT-Gateway (120) nach Anspruch 5, wobei die Verbindungsmodusbestimmungseinheit (220) einen Fall, bei dem mit einer spezifischen IoT-Vorrichtung unter den IoT-Vorrichtungen (140) im Zusammenhang stehende Daten in dem Speicher (260) gespeichert sind, als die Sicherungsbedingung einstellt.

7. Unabhängiges IoT-Gateway (120) nach Anspruch 4, wobei die Verbindungsmodusbestimmungseinheit (220) einen Fall, bei dem ein Platz, in dem Daten in dem Speicher (260) gespeichert sind, einen Schwellenwert überschreitet, als die Sicherungsbedingung einstellt.

8. Unabhängiges IoT-Gateway (120) nach Anspruch 1, wobei die erste Dienstdurchführungseinheit (230) ein erstes Kommunikationsmodul (236) umfasst, das mit mindestens einer der IoT-Vorrichtungen (140) gekoppelt und mit der mindestens einen IoT-Vorrichtung verbunden ist, und die zweite Dienstdurchführungseinheit (240) ein zweites Kommunikationsmodul (246) umfasst, das mit den restlichen der IoT-Vorrichtungen (140) gekoppelt und mit den restlichen der IoT-Vorrichtungen (140) verbunden ist.

9. Unabhängiges IoT-Gateway (120) nach Anspruch 1, wobei die erste Dienstdurchführungseinheit (230) einen MQTT-Broker (MQTT - Message Queuing Telemetry Transport) umfasst, der Publisher-Registrierung und Topic-Zuweisung für eine erste IoT-Vorrichtung verarbeitet und Subskription zu einem Topic der ersten IoT-Vorrichtung für eine Smart-Vorrichtung durchführt, die eine Statusnachricht der ersten IoT-Vorrichtung empfangen möchte.

10. Unabhängiges IoT-Gateway (120) nach Anspruch 1, wobei die erste Dienstdurchführungseinheit (230) einen MQTT-Broker umfasst, der bei Empfang eines Steuerbefehls für die erste IoT-Vorrichtung den Steuerbefehl als eine Veröffentlichungsanfrage verarbeitet, die das Topic umfasst, das die erste IoT-Vorrichtung und den Steuerbefehl angibt.

11. Unabhängiges IoT-Gateway (120) nach Anspruch 1, das ferner eine Wi-Fi-Hosteinheit umfasst, die ein DDNS-Dienstmodul (DDNS - Dynamisches Domänennamensystem), ein DHCP-Dienstmodul (DHCP - Dynamisches Hostkonfigurationsprotokoll) und ein Portweiterleitungsdienstmodul umfasst.

12. Unabhängiges IoT-Gateway (120) nach Anspruch 11, wobei die Wi-Fi-Hosteinheit nur das DDNS-Dienstmodul, das DHCP-Dienstmodul und das Portweiterleitungsdienstmodul umfasst.

13. Unabhängiges IoT-Gateway (120), das Folgendes umfasst:
ein erstes Gateway (122), das eine Verbindung zu einem Router (110) herstellt und von einer oder mehreren IoT-Vorrichtungen (140) erhaltene Statusnachrichten über den Router (110) an eine Smart-Vorrichtung (130) eines Benutzers überträgt oder Steuerbefehle für die IoT-Vorrichtungen (140) von der Smart-Vorrichtung (130) des Benutzers über den Router (110) empfängt und die empfangenen Steuerbefehle an die IoT-Vorrichtungen (140) überträgt; und
ein zweites Gateway (124), das eine Verbindung zu dem Router (110) herstellt, wenn ein Fehler in dem ersten Gateway (122) auftritt, und die von den IoT-Vorrichtungen (140) erhaltenen Statusnachrichten über den Router (110) an einen Management-Server (150) überträgt oder die Steuerbefehle für die IoT-Vorrichtungen (140) von dem Management-Server (150) über den Router (110) empfängt und die empfangenen Steuerbefehle an die IoT-Vorrichtungen (140) überträgt.

14. Unabhängiges IoT-Gateway nach Anspruch 13, wobei das zweite Gateway (124) aktiviert wird, wenn ein Fehler in dem ersten Gateway (122) auftritt, und mit den IoT-Vorrichtungen (140) gekoppelt wird.

## Revendications

1. Passerelle autonome de l'Internet des objets (IoT) (120), comprenant :
une unité de détermination de mode de connexion (220) qui détermine un mode de connexion parmi un premier mode de connexion et un second mode de connexion ;
une première unité de réalisation de service (230) qui transmet des messages de statut obtenus auprès d'un ou plusieurs dispositifs IoT (140) à un dispositif intelligent (130) d'un utilisateur par l'intermédiaire d'un routeur (110) ou qui reçoit des commandes de contrôle pour les dispositifs IoT (140) en provenance du dispositif intelligent (130) de l'utilisateur par l'intermédiaire du routeur (110) et qui transmet les commandes de contrôle reçues aux dispositifs IoT (140) quand il est déterminé qu'un mode de connexion est le premier mode de connexion ; et
une seconde unité de réalisation de service (240) qui transmet les messages de statut obtenus auprès des dispositifs IoT (140) à un serveur de gestion (150) par l'intermédiaire du routeur (110) ou qui reçoit les commandes de contrôle pour les dispositifs IoT (140) en provenance du serveur de gestion (150) par l'intermédiaire du routeur (110) et qui transmet les commandes de contrôle reçues aux dispositifs IoT (140) quand il est déterminé que le mode de connexion est le second mode de connexion.

2. Passerelle autonome IoT (120) selon la revendication 1, dans laquelle la première unité de réalisation de service (230) convertit les messages de statut obtenus auprès des dispositifs IoT (140) en un premier format de données qui peut être traité par le dispositif intelligent (130) de l'utilisateur et transmet les messages de statut convertis au dispositif intelligent (130) de l'utilisateur par l'intermédiaire du routeur (110), et dans laquelle la seconde unité de réalisation de service (240) convertit les messages de statut obtenus auprès des dispositifs IoT (140) en un second format de données qui peut être traité par le serveur de gestion (150) et transmet les messages de statut convertis au serveur de gestion (150) par l'intermédiaire du routeur (110).

3. Passerelle autonome IoT (120) selon la revendication 1, dans laquelle l'unité de détermination de mode de connexion (220) détermine initialement que le mode de connexion est le premier mode de connexion et change le mode de connexion du premier mode de connexion au second mode de connexion quand une condition de changement de mode de connexion est satisfaite.

4. Passerelle autonome IoT (120) selon la revendication 1, comprenant en outre :
une mémoire (260) qui stocke les messages de statut obtenus auprès des dispositifs IoT (140) et les commandes de contrôle pour les dispositifs IoT (140) ; et
une unité de réalisation de sauvegarde (250) qui transmet certaines des données stockées dans la mémoire (260) au serveur de gestion (150) par l'intermédiaire du routeur (110).

5. Passerelle autonome IoT (120) selon la revendication 4, dans laquelle l'unité de détermination de mode de connexion (220) détermine initialement que le mode de connexion est le premier mode de connexion et change le mode de connexion du premier mode de connexion au second mode de connexion quand une condition de sauvegarde est satisfaite, et dans laquelle l'unité de réalisation de sauvegarde (250) transmet certaines des données stockées dans la mémoire (260) au serveur de gestion (150) par l'intermédiaire du routeur (110) quand le mode de connexion est changé pour le second mode de connexion.

6. Passerelle autonome IoT (120) selon la revendication 5, dans laquelle l'unité de détermination de mode de connexion (220) établit comme condition de sauvegarde un cas où des données relatives à un dispositif IoT spécifique parmi les dispositifs IoT (140) sont stockées dans la mémoire (260).

7. Passerelle autonome IoT (120) selon la revendication 4, dans laquelle l'unité de détermination de mode de connexion (220) établit comme condition de sauvegarde un cas où un espace où sont stockées des données dans la mémoire (260) dépasse une valeur-seuil.

8. Passerelle autonome IoT (120) selon la revendication 1, dans laquelle la première unité de réalisation de service (230) comprend un premier module de communication (236) qui est apparié à au moins un des dispositifs IoT (140) et qui est connecté à l'au moins un dispositif IoT, et dans laquelle la seconde unité de réalisation de service (240) comprend un second module de communication (246) qui est apparié au reste des dispositifs IoT (140) et qui est connecté au reste des dispositifs IoT (140).

9. Passerelle autonome IoT (120) selon la revendication 1, dans laquelle la première unité de réalisation de service (230) comprend un négociateur de transport de télémétrie de mise en file d'attente de messages (MQTT) qui traite un enregistrement de publication et une affectation de rubrique pour un premier dispositif IoT et qui réalise un abonnement à une rubrique du premier dispositif IoT pour un dispositif intelligent qui souhaite recevoir un message de statut du premier dispositif IoT.

10. Passerelle autonome IoT (120) selon la revendication 1, dans laquelle la première unité de réalisation de service (230) comprend un négociateur MQTT qui, quand une commande de contrôle pour le premier dispositif IoT est reçue, traite la commande de contrôle comme demande de publication comprenant la rubrique indiquant le premier dispositif IoT et la commande de contrôle.

11. Passerelle autonome IoT (120) selon la revendication 1, comprenant en outre une unité hôte Wi-Fi qui comprend un module de service de système dynamique de noms de domaine (DDNS), un module de service sur protocole de configuration dynamique d'hôte (DHCP) et un module de service de transfert de port.

12. Passerelle autonome IoT (120) selon la revendication 11, dans laquelle l'unité hôte Wi-Fi comprend uniquement le module de service DDNS, le module de service DHCP et le module de service de transfert de port.

13. Passerelle autonome IoT (120), comprenant :
une première passerelle (122) qui se connecte à un routeur (110) et qui transmet des messages de statut obtenus auprès d'un ou plusieurs dispositifs IoT (140) à un dispositif intelligent (130) d'un utilisateur par l'intermédiaire du routeur (110) ou qui reçoit des commandes de contrôle pour les dispositifs IoT (140) en provenance du dispositif intelligent (130) de l'utilisateur par l'intermédiaire du routeur (110) et qui transmet les commandes de contrôle reçues aux dispositifs IoT (140) ; et
une seconde passerelle (124) qui se connecte au routeur (110) quand une erreur se produit dans la première passerelle (122) et qui transmet les messages de statut obtenus auprès des dispositifs IoT (140) à un serveur de gestion (150) par l'intermédiaire du routeur (110) ou qui reçoit les commandes de contrôle pour les dispositifs IoT (140) en provenance du serveur de gestion (150) par l'intermédiaire du routeur (110) et qui transmet les commandes de contrôle reçues aux dispositifs IoT (140).

14. Passerelle autonome IoT selon la revendication 13, dans laquelle la seconde passerelle (124) est activée quand une erreur se produit dans la première passerelle (122) et est appariée aux dispositifs IoT (140).
